# EUROPÄISCHE PATENTANMELDUNG

(11) **EP 3 067 297 A1**
(43) Veröffentlichungstag der Anmeldung: **14.09.2016**
(21) Anmeldenummer: 16158967.6
(22) Anmeldetag: 07.03.2016
(51) Int. Cl.: B65G 1/02, A62C 3/00, A47B 96/02

(54) **BRANDSCHUTZVORRICHTUNG FÜR EIN REGAL**

(30) Priorität: 12.03.2015 DE 102015103661
(71) Anmelder: BITO-Lagertechnik Bittmann GmbH, 55590 Meisenheim (DE)
(72) Erfinder: GASSNER, Okten, 55571 Odernheim (DE)
(74) Vertreter: Richardt Patentanwälte PartG mbB

(57) **Zusammenfassung**

Die Erfindung betrifft eine Brandschutzvorrichtung (110) für ein Regal (100), wobei die Brandschutzvorrichtung (110) eine erste Brandschutzplatte (200) umfasst, wobei die erste Brandschutzplatte (200) Segmente (204) aufweist, wobei die Segmente (204) in der Erstreckungsrichtung der ersten Brandschutzplatte (200) gesehen hintereinander angeordnet sind, wobei die Segmente (204) durch einen sich in der Erstreckungsrichtung erstreckenden durchgängigen Rücken (214) miteinander verbunden sind, wobei einander benachbarte Segmente (204) in der Erstreckungsrichtung voneinander räumlich beabstandet sind, wobei die Segmente (204) über eine Materialschwächung mit dem Rücken (214) verbunden sind.

## Beschreibung

Die Erfindung betrifft eine Brandschutzvorrichtung für ein Regal sowie ein Verfahren zur Montage einer Brandschutzvorrichtung an einem Regal.

Aus dem Stand der Technik sind Regallager bekannt, welche mit Regalstützen auf dem Boden stehen und welche über Diagonalverstrebungen der Regalstützen sowie in horizontaler Ebene über Traversen verfügen. Die Traversen dienen der Aufnahme und Lagerung von Stückgut, wie beispielsweise Kartons oder Paletten.

Um zu verhindern, dass im Falle des Ausbruchs eines Feuers dieses sich mit allzu großer Geschwindigkeit im Regallager ausbreiten kann, ist vorgesehen, dass in gewissen Abständen plattenförmige Elemente in das Regallager eingezogen werden. Diese plattenförmigen Elemente erstrecken sich dabei in horizontaler Richtung und kommen beispielsweise auf den Traversen zu liegen. Diese Platten vermindern die ungerichtete Ausbreitung von Rauchgasen und bilden außerdem einen Hitzeschutz, sodass insgesamt die Ausbreitung von Feuer eingedämmt werden kann.

Beispielsweise offenbart die WO 2014/019007 ein Regalfach sowie ein mit einem derartigen Regalfach gebildetes Regallager, welches bei geringstem Platzbedarf trotzdem eine gerichtete Lenkung von Rauchgasen sowie auftretender Wärme zwischen den Regalfächern ermöglicht und so einen ausreichenden Schutz bei Brand-belastung zwischen übereinander angeordneten Regalfächern bietet.

Es liegt der Erfindung die Aufgabe zugrunde, eine Brandschutzvorrichtung für ein Regal, ein Regal mit einer Brandschutzvorrichtung und ein Verfahren zur Montage einer entsprechenden Brandschutzvorrichtung bereitzustellen. Die der Erfindung zugrundeliegenden Aufgaben werden durch die Merkmale der unabhängigen Patentansprüche gelöst. Bevorzugte Ausführungsformen der Erfindung sind in den abhängigen Patentansprüchen angegeben.

Es wird eine Brandschutzvorrichtung für ein Regal angegeben, wobei die Brandschutzvorrichtung eine erste Brandschutzplatte umfasst, wobei die erste Brandschutzplatte Segmente aufweist, wobei die Segmente in der Erstreckungsrichtung der ersten Brandschutzplatte gesehen hintereinander angeordnet sind, wobei die Segmente durch einen sich in der Erstreckungsrichtung erstreckenden durchgängigen Rücken miteinander verbunden sind, wobei einander benachbarte Segmente in der Erstreckungsrichtung voneinander räumlich beabstandet sind, wobei die Segmente über eine Materialschwächung mit dem Rücken verbunden sind.

Ausführungsformen der Erfindung könnten den Vorteil haben, dass über eine mechanische Manipulation der Segmente die Brandschutzvorrichtung geometrisch so gestaltet werden kann, dass sie direkt in das Regal eingesetzt werden kann. Weist das Regal beispielsweise Regalstützen oder eine Diagonalverstrebung auf, so kann im Kontaktbereich der Regalstütze bzw. der Diagonalverstrebung aufgrund der Materialschwächung das dort befindliche Segment derart mechanisch manipuliert werden, dass eine Aussparung der ersten Brandschutzplatte resultiert. Die so ausgesparte erste Brandschutzplatte kann damit in der Aussparung die Regalstütze bzw. die Diagonalverstrebung aufnehmen. Damit wird insbesondere eine mechanische Bearbeitung der Brandschutzplatte beispielsweise durch Ausstanzen oder Aussägen einer Aussparung zur Aufnahme der Regalstützen bzw. Diagonalverstrebung hinfällig. Dies könnte insgesamt den Montageaufwand für die Brandschutzvorrichtung am Regal vereinfachen.

Nach einer Ausführungsform der Erfindung weist das Regal Regalprofile auf, wobei die Regalprofile Regalstützen und/oder eine Diagonalverstrebung umfassen, wobei die erste Brandschutzplatte im Bereich der Regalprofile diese Segmente aufweist. Zum Beispiel weist die Brandschutzplatte auf Höhe, z.B. in der Ebene der ersten Brandschutzplatte gesehen, diese Segmente auf.

Nach einer Ausführungsform der Erfindung ist die erste Brandschutzplatte im Regal aufgrund einer Manipulation der Segmente anordenbar. Beispielsweise umfasst die Manipulation der Segmente ein Verbiegen der Segmente, sodass eine entsprechende Aussparung resultiert, oder bei entsprechender hoher Materialschwächung gar ein Herausbrechen des jeweiligen Segments.

Nach einer Ausführungsform der Erfindung ist die erste Brandschutzplatte in der Erstreckungsrichtung der ersten Brandschutzplatte gesehen zwischen zwei benachbarten Regalstützen anordenbar. Zum Beispiel ist die erste Brandschutzplatte zwischen einander benachbarten Regalstützen aufgrund der Manipulation der Segmente anordenbar.

Nach einer Ausführungsform der Erfindung verläuft der Rücken in der Ebene der Segmente. Segmente und Rücken sind vorzugsweise einstückig und bestehen aus demselben Material. Allgemein kommt als Material eine schwer entflammbare Brandschutzvorrichtung, beispielsweise aus Metall, infrage. Andere schwer entflammbare Materialien sind ebenfalls möglich.

Nach einer Ausführungsform der Erfindung umfasst die Materialschwächung eine Sollknickstelle oder eine Sollbruchstelle.

Nach einer Ausführungsform der Erfindung umfasst die Materialschwächung eine stegförmige Verbindung zwischen den Segmenten und dem Rücken. Beispielsweise könnte jedes Segment über zwei Stege am Rücken angeordnet sein, wobei zwischen den Stegen eine längliche Aussparung befindlich ist. Dies ermöglicht ein einfaches Herstellungsverfahren der Brandschutzvorrichtung, da die hierzu notwendigen Arbeitsschritte zur Herstellung minimiert werden. Es genügen einige wenige Stanzprozesse, um die Brandschutzvorrichtung herzustellen.

Nach einer Ausführungsform der Erfindung ist senkrecht zur Erstreckungsrichtung der ersten Brandschutzplatte gesehen die Tiefe des Rückens größer als die Tiefe der Segmente oder höchstens gleich der Tiefe der Segmente. Dies könnte den Vorteil haben, dass die Fläche, welche durch den Rücken zur Verfügung gestellt wird, größer ist, als die Fläche, welche durch die Segmente insgesamt zur Verfügung gestellt wird. Wird nun beispielsweise die erste Brandschutzplatte an einer zweiten Brandschutzplatte über den Rücken befestigt, ergibt sich damit eine hinreichend große Auflagefläche des Rückens auf der zweiten Brandschutzplatte, sodass bei einer Fixierung von Rücken an zweiter Brandschutzplatte eine gute mechanische Abstützung der ersten Brandschutzplatte durch die zweite Brandschutzplatte gegeben ist. Hierzu kann der Rücken vollständig die zweite Brandschutzplatte überlappen, wobei jedoch die Segmente die zweite Brandschutzplatte nicht berühren.

Auch bei einem Montagevorgang der ersten Brandschutzplatte an der zweiten Brandschutzplatte könnte dies den Vorteil haben, dass bezüglich der Linie der Materialschwächung in der Erstreckungsrichtung des Rückens gesehen der Schwerpunkt der ersten Brandschutzplatte auf der Seite des Rückens zu liegen kommt. Wird also die erste Brandschutzplatte mit ihrem Rücken auf die zweite Brandschutzplatte wie obig beschrieben aufgelegt, so bleibt diese dort liegen, ohne selbständig auf die Seite der Segmente zu kippen. Damit könnte ohne eine weitere Vorfixierung der ersten Brandschutzplatte diese in einfacher Weise auf die zweite Brandschutzplatte aufgelegt werden und an dieser abschließend endgültig fixiert werden. Die Fixierung ist beispielsweise mittels Niet- oder Schraubverbindungen möglich.

Nach einer Ausführungsform der Erfindung umfasst die Brandschutzvorrichtung ferner die zweite Brandschutzplatte, wobei senkrecht zur Erstreckungsrichtung der ersten Brandschutzplatte gesehen die zweite Brandschutzplatte zwischen zwei benachbarten Regalstützen anordenbar ist. Vorzugsweise kommt die zweite Brandschutzplatte auf den Querstreben des Regals und/oder den Regaltraversen zu liegen.

Die zweite Brandschutzplatte könnte den Vorteil haben, dass insgesamt die Brandschutzvorrichtung mehrteilig ausgebildet werden könnte. Die Brandschutzvorrichtung wird also durch ein "Set" von einzelnen Brandschutzplatten gebildet, wobei die (kleinen) ersten Brandschutzplatten ausschließlich am Rand des Regals zum Einsatz kommen, wohingegen eine oder mehrere der großen zweiten Brandschutzplatten zwischen den Regalstützen aufgebracht werden können. Dies könnte insgesamt die Handhabbarkeit der Brandschutzvorrichtung bei der Montage stark vereinfachen.

Nach einer Ausführungsform der Erfindung weist die zweite Brandschutzplatte in der Erstreckungsrichtung der ersten Brandschutzplatte gesehen mindestens dieselbe Erstreckungslänge auf.

Wie bereits erwähnt, könnte die Brandschutzvorrichtung ferner nach einer Ausführungsform der Erfindung Mittel zur Fixierung der ersten Brandschutzplatte an der zweiten Brandschutzplatte umfassen. Mittel zur Fixierung könnten entsprechende Löcher, Schraub- und Nietmittel umfassen.

Nach einer Ausführungsform der Erfindung ist die zweite Brandschutzplatte zur Auflage auf Regalquerstreben und/oder Regaltraversen ausgebildet.

In einem weiteren Aspekt betrifft die Erfindung ein Regal mit übereinander angeordneten Regalfächern und einer Brandschutzvorrichtung, wie sie oben beschrieben wurde, wobei die Brandschutzvorrichtung zwei übereinander befindliche und einander benachbarte Regalfächer voneinander trennt.

In einem weiteren Aspekt betrifft die Erfindung ein Verfahren zur Montage einer Brandschutzvorrichtung an einem Regal, wobei die Brandschutzvorrichtung eine erste Brandschutzplatte umfasst, wobei die erste Brandschutzplatte Segmente aufweist, wobei die Segmente in der Erstreckungsrichtung der Platte gesehen hintereinander angeordnet sind, wobei die Segmente durch einen sich in der Erstreckungsrichtung erstreckenden durchgängigen Rücken miteinander verbunden sind, wobei einander benachbarte Segmente in der Erstreckungsrichtung voneinander räumlich beabstandet sind, wobei die Segmente über eine Materialschwächung mit dem Rücken verbunden sind, wobei das Regal Regalprofile aufweist, wobei die Regalprofile Regalstützen und/oder eine Diagonalverstrebung umfassen, wobei die erste Brandschutzplatte im Bereich der Regalprofile die Segmente aufweist, wobei das Verfahren eine Manipulation der Segmente umfasst und aufgrund der Manipulation Aussparungen der ersten Brandschutzplatte zur Aufnahme der Regalprofile resultieren.

Die so manipulierte Brandschutzvorrichtung kann daraufhin in das Regal eingebracht werden, sodass die Aussparungen die besagten Regalprofile aufnehmen.

Nach einer Ausführungsform der Erfindung umfasst das Verfahren ferner das Anordnen einer zweiten Brandschutzplatte in dem Regal, wobei senkrecht zur Erstreckungsrichtung der ersten Brandschutzplatte gesehen die zweite Brandschutzplatte zwischen zwei benachbarten Regalstützen angeordnet wird. Optional gibt es die Möglichkeit, die erste und die zweite Brandschutzplatte miteinander mechanisch zu verbinden, das heißt aneinander zu fixieren.

Insgesamt ergibt sich dadurch die Möglichkeit, dass ein flächiger Brandschutzboden in einem Regal eingezogen werden kann, der einfach montierbar ist und dennoch die Ausbreitung von Rauch und Feuer reduziert.

Im Folgenden werden bevorzugte Ausführungsformen der Erfindung anhand der Zeichnungen näher erläutert. Es zeigen:
- Figur 1: ein Regal mit einer Brandschutzvorrichtung,
- Figur 2: eine perspektivische Ansicht einer ersten Brandschutzplatte,
- Figur 3: ein Flussdiagramm eines Verfahrens zur Montage einer Brandschutzvorrichtung.

Im Folgenden werden einander ähnliche Elemente mit denselben Bezugszeichen gekennzeichnet.

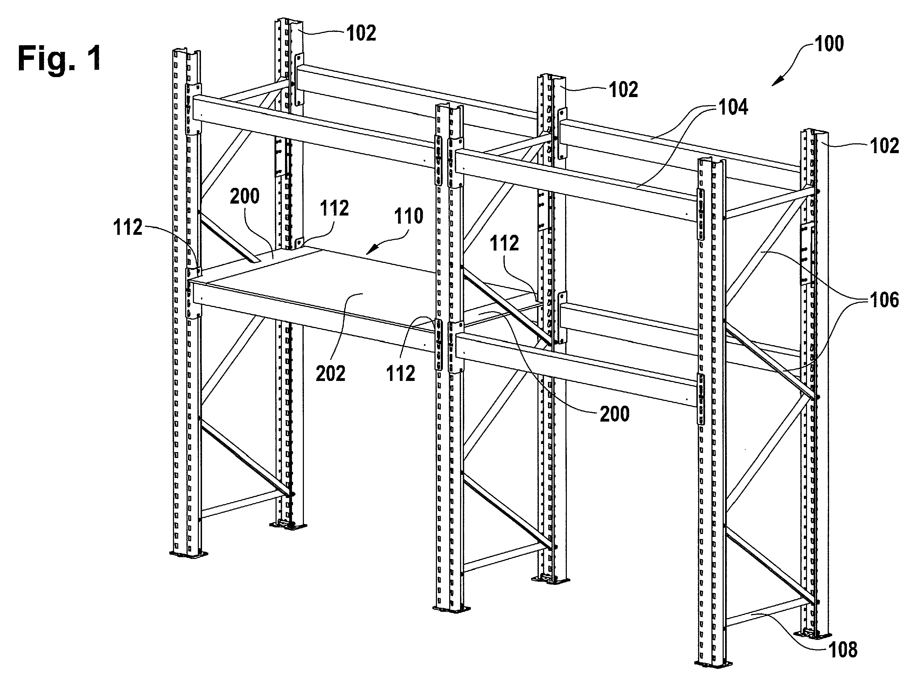

Die Figur 1 zeigt eine perspektivische Ansicht eines typischen Regals zur Lagerung von Stückgut, beispielsweise Paletten oder Kisten. Das Regal weist Regalstützen 102 auf, welche auf dem Boden stehen. Die Regalstützen sind über eine Diagonalverstrebung 106 sowie Querverbindern 108 miteinander verbunden. Die Querverbinder und die Diagonalverstrebungen 108 bzw. 106 verlaufen in der Tiefe des Regals, wohingegen Regaltraversen 104 in der Erstreckungsrichtung des Regals, das heißt in Längsrichtung des Regals, die Regalprofile miteinander verbinden.

Es sind auch die Regaltraversen 104, auf welchen die Paletten bzw. allgemein das Stückgut abgestellt und im Regal eingelagert werden kann.

Um nun im Brandfall eine Ausbreitung von Rauch, Hitze und Feuer im Regal zu minimieren, ist vorgesehen, dass Brandschutzplatten 110 in das Regal 100 eingezogen werden. Typischerweise kommen die Brandschutzplatten 110 dabei auf den Regaltraversen 104 zu liegen.

Damit die Brandschutzplatten 110 auch in das Regal eingesetzt werden können ist es erforderlich, dass in den Ecken der Brandschutzplatte 110 sowie auf Höhe der Diagonalverstrebung 106 entsprechende Aussparungen 112 der Brandschutzplatte 110 vorgesehen werden. Anderweitig wären die Diagonalverstrebungen 106 bzw. die Regalstützen 102 der Brandschutzplatte im Weg, sodass diese nicht in der Regalanlage eingebaut werden könnte.

Hierbei ist vorgesehen, dass die Brandschutzplatte 110 zweiteilig ausgeführt wird, nämlich mit einem Seitenteil 200 und einem Mittelteil 202. Es ist verständlich, dass jeweils in der Längsrichtung des Regals (Regalbreite) gesehen bezüglich eines einzelnen Mittelteils 202 zwei Seitenteile 200 benötigt werden, um die Brandschutzvorrichtung zu realisieren. Im Folgenden seien die Seitenteile 200 als "erste Brandschutzplatte" bezeichnet und das Mittelteil 202 sei als "zweite Brandschutzplatte" bezeichnet.

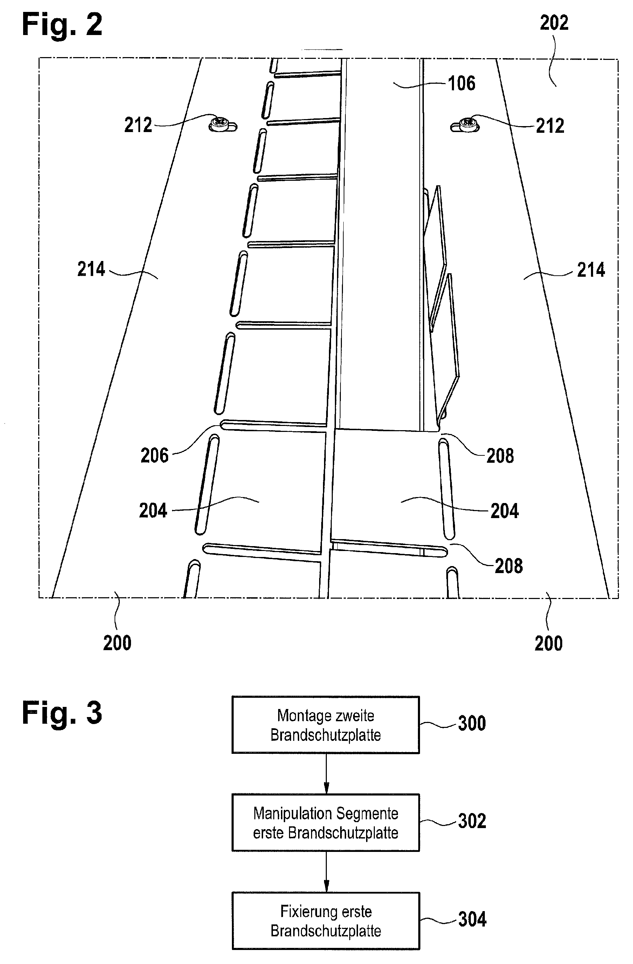

Um nun bezüglich der ersten Brandschutzplatte 200 die benötigten Aussparungen 112 zu realisieren, ist vorgesehen, dass die erste Brandschutzplatte 200 manipulierbare Segmente 204 aufweist. Die Figur 2 zeigt eine perspektivische Ansicht der Brandschutzvorrichtung, wobei hier neben der zweiten Brandschutzplatte 202 auch zwei im Bereich einer Diagonalverstrebung 106 seitlich aneinandergrenzende erste Brandschutzplatten 200 gezeigt sind. Die Brandschutzplatten 200 sind über Befestigungsmittel, im vorliegenden Beispiel über in Löcher 212 durchgeführte Schraubverbindungen mit der zweiten Brandschutzplatte 202 verbunden. Somit ist eine Relativbewegung von erster Brandschutzplatte 200 und zweiter Brandschutzplatte 202 ausgeschlossen.

Die erste Brandschutzplatte weist die Segmente 204 auf, welche in Stellungsrichtung der Platte gesehen hintereinander angeordnet sind. Die Erstreckungsrichtung der Platte wird im vorliegenden Beispiel durch die Richtung der Regaltiefe, das heißt parallel zum Querverbinder 108, gegeben sein.

Die Segmente 204 sind durch einen sich in Erstreckungsrichtung erstreckenden durchgängigen Rücken 214 miteinander verbunden. Dabei sind einander benachbarte Segmente in der Erstreckungsrichtung durch eine Aussparung 206 räumlich voneinander beabstandet. Ferner sind die Segmente 204 mit dem durchgängigen Rücken 214 über eine Materialschwächung verbunden.

Im Beispiel der Figur 2 ist diese Schwächung durch zwei einzelne Stege 208 gegeben, wobei diese Stege auf Höhe der Aussparungen 206 angeordnet sind. Je nach Art der Materialschwächung können pro Segment 204 eins, zwei oder auch mehrere Stege zum Einsatz kommen.

Es sei an dieser Stelle angemerkt, dass es auch möglich ist, dass einzelne Segmente 204 in der Erstreckungsrichtung des durchgängigen Rückens gesehen ebenfalls über einzelne Stege miteinander verbunden sein können. Diese müssen dann jedoch dergestalt ausgebildet sein, dass sie ohne großen Kraftaufwand abgebrochen werden können, sodass bezüglich der Materialschwächung 208 eine Manipulierbarkeit der Segmente 204 gegeben ist.

Grundsätzlich kann die Manipulation der Segmente 204 entweder, wie in der Figur 2 gezeigt, so sein, dass die Materialschwächung dazu verwendet wird, die Segmente 204 im Bereich der Diagonalverstrebung 106 zu verbiegen. Im Beispiel der Figur 2 wurden zwei Segmente 204 entlang der Stege 208 nach oben gebogen, sodass an dieser Stelle aufgrund der nun vorgebogenen Segmente ein Durchlass für die Diagonalverstrebung 106 gegeben ist.

Die Materialschwächung ist in der Figur 2 als Sollknickstelle über die Stege 208 ausgebildet. Es ist jedoch auch möglich, die Materialschwächung als Sollbruchstelle auszugestalten, indem zum Beispiel ein einzelner oder zwei einzelne sehr dünne Stege 208 zum Einsatz kommen. Damit ist es möglich, durch insbesondere mehrmaliges Hin- und Herbewegen des entsprechenden Segments 204 dafür zu sorgen, dass die zugehörigen Stege abbrechen und damit die entsprechenden Segmente 204 vollständig von der ersten Brandschutzplatte 200 entfernt werden können.

Erst durch die Manipulation der Segmente 204 ist es in gezielter Weise möglich, dass die erste Brandschutzplatte 200 überhaupt bezüglich der Regaltiefe gesehen in der Figur 1 in den Bereich zwischen zwei einander gegenüberliegenden Regalstücken eingesetzt werden kann. Würde also im Bereich der Regalstützen 102 bzw. der Diagonalverstrebung 106 die besagte Manipulation nicht stattfinden, wären sowohl die Regalstützen 102 als auch die Diagonalverstrebung 106 bei dem Einsetzen der ersten Brandschutzplatte in den Bereich zwischen den Regalstützen im Weg. Erst die Manipulation der entsprechenden Segmente 204 gibt diesen Weg frei und die Brandschutzplatte kann eingesetzt werden.

Die Reihenfolge der Installation von erster Brandschutzplatte und zweiter Brandschutzplatte spielt für die grundsätzliche Idee der Brandschutzvorrichtung keine Rolle. Zum Beispiel ist es möglich, zunächst die typischerweise wesentlich größere und sperrigere zweite Brandschutzplatte auf die Regaltraversen 104 mittig aufzulegen. Im Anschluss daran könnte dann auf den Randbereich der zweiten Brandschutzplatte die erste Brandschutzplatte aufgelegt werden und die Segmente 204 derselben so manipuliert werden, dass die erste Brandschutzplatte in den Bereich zwischen zwei einander in der Regaltiefe gesehen gegenüberliegenden Regalstützen eingesetzt werden kann.

Allgemein gesprochen wird also in der Erstreckungsebene der zweiten Brandschutzplatte eine Manipulation jener Segmente der ersten Brandschutzplatte vorgenommen, welche im Falle einer abgeschlossenen Installation der Brandschutzvorrichtung mit einem der Regalprofile (Regalstütze oder Diagonalverstrebung) kollidieren würde.

Es sei angemerkt, dass die beschriebene Brandschutzvorrichtung neben einer einfachen Montagemöglichkeit auch den Vorteil hat, dass insbesondere die zweite größere Brandschutzplatte mehrmals wiederverwendet werden kann, da bei der Installation der zweiten Brandschutzplatte 202 eine Beschädigung oder Manipulation derselben nicht stattfindet. Lediglich die ersten Brandschutzplatten 200 müssen auf das Neue bei einer Neuinstallation der Brandschutzvorrichtung mit einem veränderten Regal angepasst werden, dass diese zwischen einem benachbarten Regalstützen 102 aufgenommen werden kann. Gegebenenfalls kann jedoch bei einer entsprechenden Auslegung der Materialschwächung und einem vorigen Biegevorgang der Segmente als Manipulation diese Manipulation beschädigungsfrei wieder rückgängig gemacht werden, so dass bei einer Neuinstallation ein erneuter Manipulationsvorgang vorgenommen werden kann.

Die Figur 4 zeigt ein Flussdiagramm eines Verfahrens zur Montage einer Brandschutzvorrichtung an einem Regal 100, wie es oben beschrieben wurde. Zunächst wird die zweite Brandschutzplatte zwischen einander gegenüberliegenden Regalstützen (in der Breite des Regals gesehen) auf den dort quer verlaufenden Regaltraversen aufgebracht bzw. montiert. Im nachfolgenden Schritt 302 erfolgt daraufhin eine derartige Manipulation der Segmente der ersten Brandschutzplatte, sodass schließlich im nachfolgenden Schritt 304 die erste Brandschutzplatte zwischen den Regalstützen 102 (Regaltiefe gesehen) eingebracht und ohne eine Kollision mit den dortig vorhandenen Diagonalverstrebungen verbleiben kann. Danach erfolgt die optimale Fixierung der ersten Brandschutzplatte an der zweiten Brandschutzplatte. Wie bereits oben erwähnt ist es auch möglich, die Schritte 300 und 304 miteinander zu vertauschen.

### Bezugszeichenliste

- 100: Regal
- 102: Regalstütze
- 104: Regaltraverse
- 106: Diagonalverstrebung
- 108: Querverbindung
- 110: Brandschutzvorrichtung
- 112: Aussparung
- 200: erste Brandschutzplatte
- 202: zweite Brandschutzplatte
- 204: Segment
- 206: Aussparung
- 208: Steg
- 212: Mittel zur Fixierung der ersten Brandschutzplatte an der zweiten Brandschutzplatte
- 214: Rücken

## Patentansprüche

1. Brandschutzvorrichtung (110) für ein Regal (100), wobei die Brandschutzvorrichtung (110) eine erste Brandschutzplatte (200) umfasst, wobei die erste Brandschutzplatte (200) Segmente (204) aufweist, wobei die Segmente (204) in der Erstreckungsrichtung der ersten Brandschutzplatte (200) gesehen hintereinander angeordnet sind, wobei die Segmente (204) durch einen sich in der Erstreckungsrichtung erstreckenden durchgängigen Rücken (214) miteinander verbunden sind, wobei einander benachbarte Segmente (204) in der Erstreckungsrichtung voneinander räumlich beabstandet sind, wobei die Segmente (204) über eine Materialschwächung mit dem Rücken (214) verbunden sind.

2. Brandschutzvorrichtung (110) nach Anspruch 1, wobei das Regal (100) Regalprofile aufweist, wobei die Regalprofile Regalstützen (102) und/oder eine Diagonalverstrebung (106) umfassen, wobei die erste Brandschutzplatte (200) im Bereich der Regalprofile die Segmente (204) aufweist.

3. Brandschutzvorrichtung (110) nach einem der vorigen Ansprüche, wobei die erste Brandschutzplatte (200) im Regal (100) aufgrund einer Manipulation der Segmente (204) anordenbar ist.

4. Brandschutzvorrichtung (110) nach einem der vorigen Ansprüche, wobei die erste Brandschutzplatte (200) in der Erstreckungsrichtung der ersten Brandschutzplatte gesehen zwischen zwei benachbarten Regalstützen (102) anordenbar ist.

5. Brandschutzvorrichtung (110) nach einem der vorigen Ansprüche, wobei der Rücken (214) in der Ebene der Segmente (204) verläuft.

6. Brandschutzvorrichtung (110) nach einem der vorigen Ansprüche, wobei die Materialschwächung eine Sollknickstelle oder eine Sollbruchstelle umfasst.

7. Brandschutzvorrichtung (110) nach einem der vorigen Ansprüche, wobei die Materialschwächung eine stegförmige Verbindung (208) zwischen den Segmenten (204) und dem Rücken (214) umfasst.

8. Brandschutzvorrichtung (110) nach einem der vorigen Ansprüche, wobei senkrecht zur Erstreckungsrichtung der ersten Brandschutzplatte gesehen die Tiefe des Rückens (214) größer als die Tiefe der Segmente (204) oder höchstens gleich der Tiefe der Segmente (204) ist.

9. Brandschutzvorrichtung (110) nach einem der vorigen Ansprüche, ferner umfassend eine zweite Brandschutzplatte (202), wobei senkrecht zur Erstreckungsrichtung der ersten Brandschutzplatte gesehen die zweite Brandschutzplatte (202) zwischen zwei benachbarten Regalstützen (102) anordenbar ist.

10. Brandschutzvorrichtung (110) nach Anspruch 9, wobei die zweite Brandschutzplatte (202) in der Erstreckungsrichtung der ersten Brandschutzplatte (200) gesehen mindestens dieselbe Erstreckungslänge aufweist.

11. Brandschutzvorrichtung (110) nach Anspruch 9 oder 10, ferner umfassend Mittel zur Fixierung der ersten Brandschutzplatte an der zweiten Brandschutzplatte.

12. Brandschutzvorrichtung (110) nach einem der vorigen Ansprüche 9-11, wobei die zweite Brandschutzplatte (202) zur Auflage auf Regalquerstreben (108) und/oder Regaltraversen (104) ausgebildet ist.

13. Regal (100) mit übereinander angeordneten Regalfächern und einer Brandschutzvorrichtung (110) nach einem der vorigen Ansprüche, wobei die Brandschutzvorrichtung (110) zwei übereinander befindliche und einander benachbarte Regalfächer voneinander trennt.

14. Verfahren zur Montage einer Brandschutzvorrichtung (110) an einem Regal, wobei die Brandschutzvorrichtung (110) eine erste Brandschutzplatte (200) umfasst, wobei die erste Brandschutzplatte (200) Segmente (204) aufweist, wobei die Segmente (204) in der Erstreckungsrichtung der Platte gesehen hintereinander angeordnet sind, wobei die Segmente (204) durch einen sich in der Erstreckungsrichtung erstreckenden durchgängigen Rücken (214) miteinander verbunden sind, wobei einander benachbarte Segmente (204) in der Erstreckungsrichtung voneinander räumlich beabstandet sind, wobei die Segmente (204) über eine Materialschwächung mit dem Rücken (214) verbunden sind, wobei das Regal (100) Regalprofile aufweist, wobei die Regalprofile Regalstützen (102) und/oder eine Diagonalverstrebung (106) umfassen, wobei die erste Brandschutzplatte (200) im Bereich der Regalprofile die Segmente (204) aufweist, wobei das Verfahren eine Manipulation der Segmente (204) umfasst, wobei aufgrund der Manipulation Aussparungen der ersten Brandschutzplatte zur Aufnahme der Regalprofile resultieren.

15. Verfahren nach Anspruch 14, ferner umfassend anordnen einer zweiten Brandschutzplatte in dem Regal, wobei senkrecht zur Erstreckungsrichtung der ersten Brandschutzplatte gesehen die zweite Brandschutzplatte (202) zwischen zwei benachbarten Regalstützen (102) angeordnet wird.
